# EUROPÄISCHE PATENTSCHRIFT

(11) **EP 1 766 328 B1**
(45) Veröffentlichungstag und Bekanntmachung des Hinweises auf die Patenterteilung: **02.10.2013**
(21) Anmeldenummer: 05755109.5
(22) Anmeldetag: 13.06.2005
(51) Int. Cl.: G01B 11/25

(54) **SENSOR ZUR VERMESSUNG DER OBERFLÄCHE EINES OBJEKTS**
SENSOR FOR MEASURING THE SURFACE OF AN OBJECT
CAPTEUR POUR MESURER LA SURFACE D'UN OBJET

(30) Priorität: 14.06.2004 DE 202004009224 U
(43) Veröffentlichungstag der Anmeldung: 28.03.2007
(73) Patentinhaber: Isra Vision Systems AG, 64297 Darmstadt (DE)
(72) Erfinder: ERSÜ, Enis, 64297 Darmstadt (DE); LAMBERT, Georg, 64285 Darmstadt (DE)
(74) Vertreter: KEIL & SCHAAFHAUSEN Patentanwälte
(86) Internationale Anmeldenummer: PCT/EP2005/006300
(87) Internationale Veröffentlichungsnummer: WO 2005/121699

(56) Entgegenhaltungen:
- DE-A1- 4 034 007
- DE-A1- 19 636 354
- DE-A1- 19 742 264
- US-A- 5 615 003

## Beschreibung

Die Erfindung betrifft einen Sensor zur Vermessung der Oberfläche eines Objekts mit einer Kontrastierungseinheit zur Projektion eines Musters auf die Oberfläche des Objekts sowie einer Kamera zur Aufnahme des auf die Oberfläche des Objekts projizierten Musters gemäß dem Oberbegriff des Anspruchs 1. Dieser Sensor eignet sich mit einer an den Sensor anschließbare oder in den Sensor integrierten Auswerteeinheit insbesondere für das Messprinzip der Triangulation.

Derartige nach dem Prinzip der Triangulation arbeitende Sensoren sind bereits bekannt. Sie verwenden Laser als Kontrastierungseinheit und projizieren zur Kontrastierung einen Streifen auf die zu vermessende Oberfläche. Dieses Grundprinzip ist bspw. aus der US 6,256,099 B1 oder der DE 44 02 414 A1 bekannt. Durch Auswertung des von der Kamera aufgenommenen Streifens können entlang einer Kurve 3-dimensionale Punkte ermittelt werden, die Aufschluss über die Oberflächenstruktur geben. Nachteilig ist an den bisher bekannten Sensoren, dass diese aufgrund des Lasers zur Erzeugung des Kontrastierungsstreifens eine große Bauform aufweisen. Durch das Laserlicht bestehen ferner Sicherheitsrisiken für sich im Messbereich aufhaltende Menschen, wenn das Laserlicht auf die Netzhaut fällt. Außerdem sind Laser empfindliche optische Geräte, so dass die bekannten Sensoren empfindlich auf Erschütterungen reagieren und insgesamt nicht robust sind.

Aus der DE 298 16 344 U1 ist eine ähnliche Vorrichtung zur kontaktlosen optischen dreidimensionalen Messanalyse bekannt, bei der in einem Sensorgehäuse ein bspw. als LED-Beleuchtung ausgebildeter Projektor und eine Kamera vorgesehen sind. Während der Projektor quer zur Abstrahlrichtung angeordnet und das Projektionsbild über einen Spiegel aus dem Gehäuse ausgelenkt wird, ist die Kamera mit ihrer optischen Achse in Abstrahlrichtung angeordnet. Dies führt zu einem hohen Sensorgehäuse, welches leicht mit der Verfahreinrichtung, an der es festgelegt ist, kollidieren kann bzw. deren Verstellweg einschränkt.

Aus der DE 197 42 264 A1 ist ein Endoskop zur optischen dreidimensionalen Erfassung von Objekten mit einer Aufnahmeeinrichtung und einer als Projektor ausgebildeten Beleuchtungseinrichtung bekannt, die entlang der Längsachse des Endoskopgehäuses angeordnet sind. Das Projektionsbild und die Aufnahmebild treten durch eine gemeinsame Öffnung aus dem Endoskop aus bzw. in dieses ein. Hierdurch wird eine kompakte Messanordnung geschaffen, die eine dreidimensionale Erfassung eines Objekts auch an unzugänglichen Stellen ermöglicht. In der US 2001/0038705 A1 ist ein ähnliches optisches Prinzip für ein Scansystem beschrieben, bei dem ein projiziertes Bild und ein aufgenommenes Bild durch eine gemeinsame Öffnung aus- und eintreten. Aufgrund dieser optischen Anordnung Ist jedoch eine genaue Vermessung des Objekts nicht möglich.

Die DE 40 34 007 A1 offenbart eine Vorrichtung zur optischen Erfassung von Oberflächenstrukturen an Zähnen, bei der ein mit einer Fluoreszenzfarbe beschichteter Zahn mit einer 3D-Kamera optisch vermessen wird, indem mittels einer auf die Fluoreszenzfarbe abstimmten Lichtquelle, bspw. einer LED, ein Lichtstrahlbündel über einen ein Prisma aufweisenden Projektionsstrahlengang auf die Oberfläche des Zahnes gerichtet wird. In dem Projektionsstrahlengang kann eine Gittermaske angeordnet sein. Das von der Oberfläche zurückgeworfene Streulicht wird über einen Strahlteiler in einen zum dem Projektionsstrahlengang versetzten Beobachtungsstrahlengang eingekoppelt und auf die 3D-Kamera gelenkt. In dem für die Projektionsstrahlung und die Beobachtungsstrahlung gemeinsamen Lichtaustrittskanal sind ein langgestrecktes Prisma und eine Linse angeordnet.

In der DE 196 36 354 A1 wird eine ähnliche Anordnung für optische Aufnahmen für die Darstellung und Vermessung eines Objekts beschrieben, bei der zwei Strahlenquellen und eine Kamera derart nebeneinander angeordnet sind, dass die beiden Strahlenquellen zur Beleuchtung des Objekts und der Beobachtungsstrahl der Kamera durch denselben durch ein Prisma gebildeten Strahlengang aus der Anordnung ausgekoppelt bzw. in die Anordnung eingekoppelt werden. Die optischen Achsen der Strahlenquellen und der Kamera sind entsprechend jeweils winklig zueinander angeordnet. Bei den Strahlenquellen handelt es sich um eine Flächenbeleuchtung und um einen Musterprojektor.

Aus der US 5,615,003 ist ein Profilscanner zur Bestimmung zur Bestimmung der Form und der Größe der Oberfläche eines Objekts bekannt. Das System weist einen Laser-Projektor zur Projektion eines räumlich kodlerten Musterstreifens mit einer Breite von 0,04 Inch auf das Objekt auf, um das sich bewegende Objekt zeilenweise zu scannen. Dazu wird der Lichtstreifen über einen an einem Ende des Profilscanners angeordneten Spiegel umgelenkt und durch eine an dem Lichtaustritt des Profilscanners angeordnete Maske auf das Projekt projiziert. Das projizierte Licht wird an dem Objekt diffus gestreut, so dass ein Teil des Lichts durch ein Fenster in den Profilscanner gelangt, dort an einen an dem anderen Ende des Profilscanners angeordneten Spiegel umgelenkt und durch eine als CCD-Array ausgebildete Kamera aufgenommen. Die Kamera und der Laser-Projektor sind in einer Richtung senkrecht zu ihren jewelligen optischen Achsen versetzt zueinander angeordnet.

Aufgabe der Erfindung ist es daher, einen Sensor der eingangs genannten Art vorzuschlagen der kompakt aufgebaut und in der Anwendung robust ist und eine hohe Genauigkeit bei der Vermessung ermöglicht.

Diese Aufgabe wird bei einem Sensor der eingangs genannten Art mit den Merkmalen des Anspruchs 1 gelöst. Die Kontrastierungseinhelt weist dabei einen LED-Projektor auf. LED's (Light Emitting Diodes) lassen sich im Vergleich zu einem Laser durch eine weniger aufwendige Elektronik ansteuern, die erfindungsgemäß mit in den Sensor integriert sein kann, und sind zudem kostengünstiger, Die LED's sind unempfindlich gegenüber Erschütterungen und Temperatur schwankungen und das erzeugte Licht ist für das menschliche Auge weniger gefährlich. Durch den Einsatz eines LED-Projektors wird also ein kleiner und flexibel einsetzbarer Sensor zur Oberflächenvermessung geschaffen, der bspw. auch tauglich ist, um auf einem Roboter montiert zu werden, mit den damit einhergehenden Belastungen. Ferner sind die Kamera und der LED-Projektor in Längsanordnung im dem Sensorgehäuse angeordnet. Dieses weist daher eine nur geringe Bauhöhe und Bautiefe auf und ist im Querschnitt etwa rechteckig aufgebaut. Um das Projektionsbild aus dem Gehäuse auszuwerfen und dessen Bild auf dem Objekt aufzunehmen, sind der Kamera und dem Projektor jeweils Umlenkspiegel zugeordnet, welche an den in Längsrichtung des Sensors entgegengesetzten Enden angeordnet sind und das Projektionsbild aus dem Sensor auskoppeln und dessen Aufnahmebild in den Sensor einkoppeln. Weil die optischen Achsen der Projektion und der Bildaufnahme bei dieser Anordnung den größtmöglichen Abstand aufweisen, weist das Messergebnis die größtmögliche Genauigkeit auf.

Eine hochwertige Projektion lässt sich durch einen LED-Projektor erreichen, der eine Hochleistungs-LED, eine Fresnellinse und Masken zur Mustererzeugung aufweist.

Das projizierte Muster kann bspw. aus einem oder mehreren Streifen bestehen. Um nicht nur 3-dimensionale Punkte entlang einer Kurve ermitteln zu können, kann das Muster erfindungsgemäß aus mehreren Streifen bestehen oder diese aufweisen. Alternativ können auch andere Flächenmuster verwendet werden. Damit lassen sich bspw. mittels Triangulation 3-dimensionale Punktdaten einer Oberfläche erhalten, so dass anhand der mehreren Streifen bzw. des Flächenmusters eine 3-dimensionale Fläche ermittelt werden kann. Dafür wird der LED-Projektor entsprechend kalibriert, um ein Modell der Lage des Streifen- bzw. Projektionsmusters im Raum zu erhalten.

Die 3-dimensionalen Flächendaten können dann von einer Auswerteeinheit, die erfindungsgemäß an einen Sensor angeschlossen werden oder in diesen integriert sein kann, subpixelgenau berechnet werden. Dabei können die Messpunkte mit Splines oder als Polygone dargestellt werden. Erfindungsgemäß kann das Muster jedoch auch an die Oberfläche angepasst werden und bspw. aus einer Projektion von konzentrischen Kreisen, radialen Strahlen oder dgl. geometrischen Figuren bestehen. Ferner ist es möglich Streifen und/oder andere geometrische Figuren in einer Projektion zu kombinieren.

Um die Auswertesicherheit zu erhöhen, kann das Muster codiert ausgeführt sein. Bei einem aus bspw. mehreren Streifen gebildeten Muster ist jedem Streifen eine eigene Codierung bspw. in Form eines Strichcodes oder einer sonstigen eindeutigen Kennung zugeordnet. Die Codierung erhöht die Robustheit der Streifendetektion im Bild, da bei codierten Streifen eine Plausibilitätsprüfung für das bei der Auswertung notwendige Abzählen der Streifen im Bild möglich ist. Eine Codierung ist analog auch bei anderen projizierten Mustern möglich.

Um das Muster verschiedenen Objektoberflächen anpassen zu können, kann der LED-Projektor gemäß einer besonders bevorzugten Ausführungsform drehbar montiert sein. Dadurch kann das Muster auf der Oberfläche gedreht und der Oberflächenstruktur optimal angepasst werden. Für den Betrieb wird der LED-Projektor dann vorzugsweise arretiert, um eine Verstellung bzw. Dejustage zu verhindern.

Gemäß der Erfindung ist in den Sensor eine Flächenbeleuchtung, insbesondere eine LED-Flächenbeleuchtung, integriert. Durch die Flächenbeleuchtung kann die Kamera des Sensors auch 2-dimensionale Merkmale auf der Objektoberfläche wahrnehmen.

Erfindungsgemäß sind die Kamera und den LED-Projektor in Längsanordnung auf einer optischen Achse montiert. Dies erleichtert die Einstellung und die Auswertung der Messergebnisse, weil die optischen Achsen des Projektors und der Kamera übereinstimmen.

In diesem Fall sind der Kamera und dem LED-Projektor vorzugsweise jeweils ein bewegbarer Umlenkspiegel zugeordnet. Durch die Umlenkspiegel werden das Projektionsmuster des LED-Projektors auf die Oberfläche des Objekts gelenkt und das Sichtfeld der Kamera auf dieselbe Oberfläche ausgerichtet. Damit ergibt sich eine rechnerische Länge der Triangulationsbasis, die größer ist als die Gehäuselänge. Ferner ist die Bauform dahingehend optimiert, dass sie die kleinstmögliche Bauform zur Realisierung einer bestimmten Länge der Triangulationsbasis bei höchster Packungsdichte darstellt.

Erfindungsgemäß können die Kamera und/oder der LED-Projektor ein auswechselbares Objektiv und/oder einen Filter aufweisen. Durch Variation von Objektiven insbesondere mit unterschiedlichen Brennweiten und ggf. einstellbaren Winkeln der Umlenkspiegel kann der Sensor für eine Vielzahl von Genauigkeitsund Entfernungsbereichen angepasst bzw. eingesetzt werden. Ferner ist es sinnvoll, vor der Kamera einen an die Farbe bzw. das Spektrum der zur Projektion und/oder Beleuchtung eingesetzten LED's angepassten Filter einzusetzen, um Fremdlicht- und Umgebungseinflüsse zu minimieren.

Vorteilhafter Weise ist dem LED-Projektor und/oder der Flächenbeleuchtung eine Beleuchtungssteuerung für eine Dauerbeleuchtung und/oder einen Blitzbetrieb zugeordnet, die bspw. in Form einer Steuerelektronik in den Sensor integriert ist. Die Elektronik dient zur Ansteuerung der LED's. Vorzugsweise sind der LED-Projektor und/oder die Flächenbeleuchtung getrennt voneinander schaltbar, so dass beide Beleuchtungskanäle (LED-Projektor und LED-Flächenbeleuchtung) separat voneinander ansteuerbar sind. Für beide Kanäle ist ein Blitzbetrieb möglich. Ferner können die LED's erfindungsgemäß bei einem definierten Einschaltpunkt für eine definierte Zeitdauer geschaltet werden.

Bei den LED's sind die Ein- und Ausschaltverzögerung extrem kurz. Daher können die erfindungsgemäßen LED-Projektor und LED-Flächenbeleuchtung extrem kurz und schnell hintereinander geschaltet und geblitzt werden. Damit können aufeinander folgende Messungen in sehr kurzen Zeitabständen durchgeführt werden, bei denen der LED-Projektor, die Flächenbeleuchtung, die Kamera und/oder eine integrierte oder an den Sensor anschließbare Auswerteeinrichtung bspw. mit einem Takt von etwa 1 bis 50 ms schaltbar sind.

Besonders vorteilhaft ist es für eine reibungslose Ansteuerung des Sensors und Auswertung der Sensordaten, wenn in den Sensor eine Elektronik mit einem Mikroprozessor zur automatischen Identifikation des Sensors über einen elektronischen Speicher, zur Kommunikation des Sensors mit einer Anschlusseinheit und/oder zur Temperaturkompensation und Kalibrierdatenverwaltung integriert ist. Durch die Identifikation des Sensors in einer integrierten Sensorelektronik ist ein flexibler Anschluss an verschiedene Anschlusseinheiten möglich, wobei die erforderliche Kommunikation ohne weitere Einstellungen im Rahmen einer Plug-and-Play-Lösung realisiert werden kann. Ferner sind sensorspezifische Auswertedaten, bspw. zur Temperaturkompensation oder Kalibrierdatenverwaltung, unmittelbar dem Sensor zugeordnet und stehen für jede Anschlusseinheit gleichermaßen zur Verfügung. Sämtliche Daten können in einem Speicher der Elektronik abgespeichert werden. Ferner kann die Elektronik für den angeschlossenen Sensor einen eigenen Kommunikationskanal zur Anschlusseinheit zur Verfügung stellen, so dass eine parallele Kommunikation mit mehreren angeschlossenen Sensoren möglich ist. Ferner kann die Beleuchtungssteuerung in die Elektronik mit integriert sein.

Eine optimierte Handhabung des Sensors kann erreicht werden, wenn der Sensor in einem Gehäuse angeordnet ist, bei dem dem LED-Projektor, der Kamera und ggf. der Flächenbeleuchtung zugeordnete Austrittsöffnungen auf einer Seite des Gehäuses angeordnet sind. Erfindungsgemäß ist die Flächenbeleuchtung in Längsrichtung in der Mitte des Gehäuses positioniert. Der LED-Projektor und die Kamera sind auf beiden Seiten der Flächenbeleuchtung und die Umlenkspiegel jeweils an den Enden des Gehäuses angeordnet. Auch die Befestigung der Sensoreinheit zum Festlegen an einem Handhabungsgerät, bspw. einem Roboter, kann in Längsrichtung in der Gehäusemitte erfolgen.

Um die Herstellung des Sensors und Wartungsarbeiten zu erleichtern, kann das Gehäuse des Sensor erfindungsgemäß mehrteilig aufgebaut sein. Auf diese Weise sind die einzelnen Komponenten des Sensors leicht zugängllch. Insbesondere kann das Gehäuse über seine gesamte Längsrichtung geteilt aufgebaut sein. Ferner kann das Gehäuse auch in Längsrichtung aus zwei oder mehr Gehäuseteilen bestehen. Durch einen solchen modularen Aufbau ist es bspw. durch Einfügen eines Zwischenteils im Zentrum des Gehäuses möglich, das Gesamtgehäuse zu verlängern und den Abstand zwischen der Projektionsöffnung und der Kameraöffnung zu vergrößern, um eine höhere Genauigkeit bei der Triangulation zu erreichen.

Um die Zugänglichkeit in das Sensorinnere zu verbessern, kann das Gehäuse des Sensors aus zwei aneinander festgelegten, L-förmigen Gehäuseteilen auf gebaut sein, die an den Stirnseiten miteinander verschraubt sind. Die Komponenten des Sensors, insbesondere der Projektor, die Kamera und/oder die Flächenbeleuchtung, sind vorzugsweise an einem Gehäuseteil festgelegt. Durch Trennen der Gehäuseteile sind diese Komponenten dann besonders einfach zugänglich.

Zum Schutz der einzelnen Komponenten und zu deren Vormontage können die Kontrastierungseinheit mit dem LED-Projektor, die Kamera und/oder die Flächenbeleuchtung jeweils ein eigenes Gehäuse aufweisen.

Durch die vorbeschriebene Baukastenkonstruktion lässt sich auf konstruktiv einfache Weise ein Sensor mit variabler Messentfernung, variablem Messvolumen und variabler Genauigkeit erreichen. Dazu können die Objektive an der Kamera und/oder dem Projektor, die Gehäuselänge und/oder die Winkel der Umlenkspiegel in ihren Winkelhalterungen variiert werden.

Ferner ist es besonders vorteilhaft, wenn das Gehäuse des Sensors, die Gehäuse der einzelnen Sensorkomponenten oder Teile davon aus einem Kohlenstofffaser-Verbundwerkstoff (CFK) hergestellt ist. Bspw. könnte eine CFK-Basisplatte vorgesehen werden, auf der sämtliche optische Komponenten des Sensors angeordnet sind. CFK-Verbundwerkstoffe sind leicht, robust und weisen ein sehr stabiles Temperaturverhalten auf, so dass das optische System auch für Anwendungen mit hohen Temperaturschwankungen eingesetzt werden kann. Häufig treten solche Temperaturschwankungen in Fertigungshallen auch aufgrund jahreszeitlich bedingter Temperaturunterschiede auf. Die CFK-Basisplatte kann dann in der Mitte eines aus herkömmlichen Materialien bestehenden Sensorgehäuses festgelegt und zu beiden Seiten hin schwimmend gelagert sein. Durch diese in Längsrichtung des Sensors freie Lagerung können für das Gehäuse und die Basisplatte auch Werkstoffe mit einem unterschiedlichen Temperaturverhalten verwendet werden. So kann sich bspw. das Gehäuse des Sensors bei einer Temperaturänderung ausdehnen oder zusammenziehen, während die Basisplatte mit den optischen Komponenten temperaturstabil ist, um eine hervorragende optische Qualität des Sensors zu ermöglichen.

Weitere Merkmale, Vorteile und Anwendungsmöglichkeiten der Erfindung ergeben sich aus der nachfolgenden Beschreibung einer bevorzugten Ausführungsform und der Zeichnung. Dabei bilden alle beschriebenen und/oder bildlich dargestellten Merkmale für sich den Gegenstand der Erfindung, auch unabhängig von ihrer Zusammenfassung in den Ansprüchen oder deren Rückbeziehung. Es zeigen:
- Fig. 1: eine schematische Draufsicht auf den Innenaufbau eines erfin-dungsgemäßen Sensors;
- Fig. 2: eine dreidimensionale Ansicht des Gehäuses des Sensors gemäß Fig. 1;
- Fig. 3: einen Längsschnitt durch das Sensorgehäuse gemäß Fig. 1 und
- Fig. 4: einen Querschnitt durch das Sensorgehäuse gemäß Fig. 1.

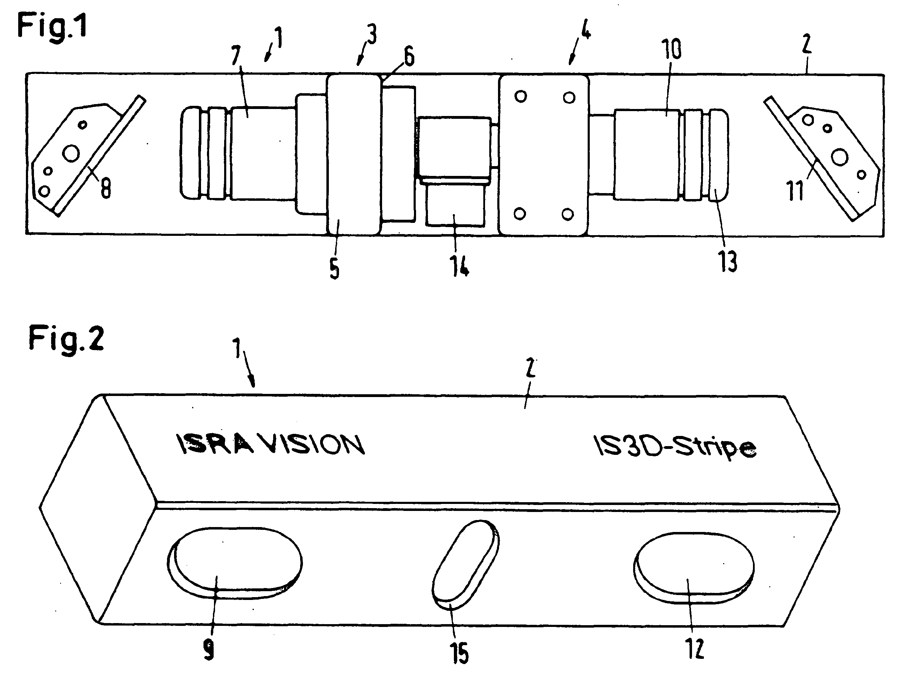

Fig. 1 zeigt den Aufbau eines erfindungsgemäßen Sensors 1 zur Vermessung der Oberfläche eines Objekts in einem Gehäuse 2. Der Sensor 1 weist eine Kontrastierungseinheit 3 zur Projektion eines Musters auf die Oberfläche des Objekts sowie eine Kamera 4 zur Aufnahme des auf die Oberfläche des Objekts projizierten Musters auf.

Die Kontrastierungseinheit 3 umfasst einen LED-Projektor 5, der ein aus mehreren codierten Streifen bestehendes Muster erzeugt. Dazu sind eine entsprechende LED und Optik in das Projektorgehäuse 6 aufgenommen, das mit einem Deckel verschließbar und drehbar angeordnet ist, wobei das Projektorgehäuse 6 im Betrieb fixiert werden kann. Zur Erzeugung eines Projektionsbildes auf der zu vermessenden Objektoberfläche ist auf den LED-Projektor 5 ein Objektiv 7 aufgesetzt, das auf einen Umlenkspiegel 8 ausgerichtet ist. Der Umlenkspiegel 8 wirft das Projektionsbild durch eine Projektionsöffnung 9 (vgl. Fig. 2) auf die zu vermessende Oberfläche eines nicht dargestellten Objekts.

Das dort erzeugte Projektsbild wird durch die Kamera 4 aufgenommen. Dazu ist ein Objektiv 10 der Kamera 4 auf einen Umlenkspiegel 11 ausgerichtet, der das Projektionsbild durch eine Kameraöffnung 12 (vgl. Fig. 2) einfängt und auf der Sensorfläche der Kamera 4 abbildet. Vor dem Objektiv 10 der Kamera 4 ist ein Filter 13 angebracht.

Die LED-Flächenbeleuchtung 14 ist in der Mitte des Gehäuses 2 angeordnet und besteht vorzugsweise aus mehreren (mindestens zwei) LED's. Das Licht dieser LED's tritt durch eine Beleuchtungsöffnung 15 (vgl. Fig. 2) aus dem Sensor 1 aus und dient einer gleichmäßigen Beleuchtung der zu vermessenden Objektoberfläche.

Zur Ansteuerung des LED-Projektors 5 und der LED-Flächenbeleuchtung 14 ist eine nicht dargestellte Beleuchtungssteuerung bzw. Elektronik vorgesehen, die in den Sensor 1 integriert sein kann. Diese kann den LED-Projektor 5 und die LED-Flächenbeleuchtung 14 jeweils separat mit Dauer- oder Blitzbeleuchtung beaufschlagen. Eine entsprechende Steuerung der Kamera 4 ist mit in dem Gehäuse der Kamera integriert, welche über nicht dargestellte Anschlüsse an eine Auswerteeinrichtung zur Auswertung der aufgenommenen Bilder angeschlossen ist.

Insbesondere durch die Kombination des LED-Projektors 5 mit der LED-Flächenbeleuchtung 14 kann der Ort bspw. einer Bohrung oder sonstigen Aussparung in einer Oberfläche sehr effizient gemessen werden. Dazu können separat Aufnahmen mit dem projizierten Muster und der Flächenbeleuchtung gemacht werden. Durch Kopplung beider Aufnahmen bzw. der ermittelten Positionsdaten kann die Position des Merkmals im 3-dimensionalen Raum sehr genau ermittelt werden.

Die LED-Flächenbeleuchtung 14 ist in Längsrichtung des Gehäuses 2 in der Mitte angeordnet. Auf beiden Seiten der LED-Flächenbeleuchtung 14 sind auf einer gemeinsamen optischen Achse, welche in Längsrichtung des Gehäuses 2 liegt, der LED-Projektor 5 und die Kamera 4 angeordnet, wobei die Blickrichtungen von Kamera 4 und LED-Projektor 5 entgegengesetzt sind. An den jeweiligen Enden des Gehäuses 2 in Längsrichtung sind je ein Umlenkspiegel 8, 11 in der optischen Achse angeordnet, wobei der Winkel der Umlenkspiegel 8, 11 relativ zu optischen Achse variiert werden kann. Durch die Umlenkspiegel 8,11 werden das Projektionsbild und das aufzunehmende Bild durch die in einer Seite des Gehäuses 2 angeordneten Projektionsöffnung 9 und Kameraöffnung 12 gelenkt. Die Beleuchtungsöffnung 15 ist in derselben Seite des Gehäuses 2 an der der LED-Flächenbeleuchtung 14 entsprechenden Stelle angeordnet.

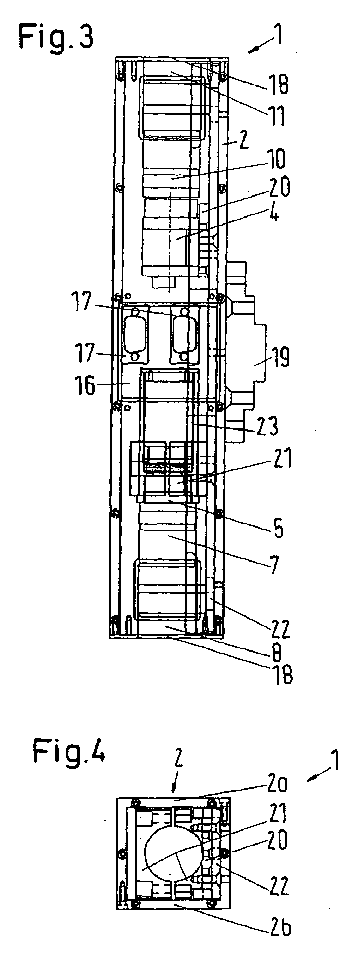

Der in Fig. 3 dargestellte Längsschnitt durch den Sensor 1 zeigt eine detaillierte Ansicht des inneren Aufbaus des Sensors 1. In der dargestellten Richtung sind in das Gehäuse 2 des Sensors 1 von oben nach unten ein Umlenkspiegel 11 mit Spiegelhalter, ein Objektiv 10 und eine Kamera 4 integriert. Daran schließt sich eine in Fig. 3 nicht dargestellte LED-Flächenbeleuchtung 14 an, die in Fig. 3 von einer außen am Gehäuse 2 angebrachten Anschlussplatte 16 mit Anschlüssen 17 verdeckt ist. Nach unten schließt sich der in einem separaten Projektorgehäuse 23 aufgenommene LED-Projektor 5 mit seinem Objektiv 7 an, welches auf den Umlenkspiegel mit seinem Spiegelhalter gerichtet ist. An den oben und unten dargestellten Stirnseiten des Gehäuses 2 in Längsrichtung wird das Gehäuse 2 durch mit dem Gehäuse 2 verschraubbare Seitendeckel 18 verschlossen. In Längsrichtung in der Mitte des Gehäuses 2 ist von außen eine Befestigung 19 vorgesehen, mit welcher der Sensor 1 an einem Handhabungsgerät angebracht werden kann.

Die Kamera 4 und der Projektor 5 sind mit einem Kamerahalter 20 und einem Projektorhalter 21 an einer gemeinsamen Basisplatte 22 aus einem Kohlefaser-Verbundwerkstoff montiert, welche ihrerseits an dem Gehäuse 2 des Sensors 1 angebracht ist. Dabei sind der Projektor 5 und die Kamera 4 jeweils in eigenen Gehäusen angeordnet, die an dem Projektorhalter 21 und dem Kamerahalter 20 befestigt werden. Die Basisplatte 22 ist in Längsrichtung des Sensors 1 in der Mitte an dem Gehäuse 2 festgelegt und zu den Enden des Gehäuses 2 schwimmend in dem Gehäuse 2 gelagert. Dies hat den Vorteil, dass die sehr temperaturstabile Basisplatte 22 mit der auf ihr montierten Optik festliegt und das Gehäuse 2 des Sensors 1 sich bspw. bei einer Längenänderung aufgrund eines Temperatureinflusses relativ zu der Basisplatte verschieben kann, ohne dass sich die optischen Eigenschaften des Sensors 1 ändern.

Die Verwendung einer gemeinsamen Basisplatte 22 für die optischen Komponenten Kamera 4, Projektor 5 und ggf. Flächenbeleuchtung 14 hat also den Vorteil, dass das optische System sicher fixiert ist und sich nicht mehr dejustiert. Die Verwendung von Kohlefaser-Verbundwerkstoff für die Basisplatte 22 hat zudem den Vorteil, dass die Basisplatte 22 ein sehr stabiles Temperaturverhalten aufweist.

Wie dem Querschnitt in Fig. 4 zu entnehmen, ist das Gehäuse 2 des Sensors 1 aus zwei L-förmigen Gehäuseteilen 2a, 2b aufgebaut, welche aus jeweils 2 senkrecht zueinander angeordneten Schenkeln bestehen. Die Gehäuseteile 2a, 2b sind in ihrer Grundform gleich ausgebildet und weisen jeweils einen längeren und einen kürzeren Schenkel auf. Dadurch können die Gehäuseteile so aufeinander gestellt werden, dass jeweils der kürzere Schenkel an die Innenseite des längeren Schenkels anstößt und mit diesem verschraubt ist. Dabei wird im Inneren des Gehäuses 2 ein rechteckiger Freiraum ausgebildet, in den die Komponenten des Sensors 1 aufgenommen sind.

Die Basisplatte 22 ist an dem einen Gehäuseteil 2b festgelegt. Mit der Basisplatte 22 sind der Kamerahalter 20 und der Projektorhalter 21 jeweils verschraubt. Durch diesen Aufbau kann das Gehäuse 2 des Sensors 1 leicht geöffnet werden, ohne dass die Komponenten des Sensors anschließend optisch neu justiert werden müssen.

Ein nicht näher dargestelltes separates Projektorgehäuse 23 wird in dem Projektorhalter 21 festgelegt wird. Das Projektorgehäuse 23 weist einen an seiner einen Stirnseite festgelegten LED-Halter auf. In dieser Stirnseite befindet sich auch eine Durchgangsöffnung für die Kabelanschlüsse der LED. Über einen in einem Innengewinde des Projektorhalters 23 geführten Schraubring können in dem Projektorhalter 23 gegen einen im Inneren des Projektorhalters 23 ausgebildeten Vorsprung eine Fresnellinse und eine Streifenmaske zur Erzeugung des Projektionsmusters festgelegt werden. Die Fresnellinse und die Streifenmaske sind auf diese Weise einfach austauschbar.

Aufgrund des separaten Projektorgehäuses 23 kann der Projektor 5 vormoniert und getestet werden, so dass bei der Montage des Sensors 1 bereits ein fertiger und funktionsfähiger Projektor 5 eingesetzt werden kann. Dies vereinfacht sowohl die Montage als auch den Austausch des Projektors 5 im Falle eines Defekts.

Diese Bauform stellt einen optimalen Aufbau dar, bei der die Triangulationsbasis für die Auswertung der Bilder bei höchster Packungsdichte und größtmöglicher Kompaktheit am größten ist. Der erfindungsgemäße Sensor 1 kann jedoch auch mit einem anderen Sensoraufbau realisiert werden, wobei die Verwendung von LED's als Beleuchtungs- und Kontrastierungseinheiten weniger Sicherheitsrisiken im Vergleich zu Lasersystemen und enorme Kostenvorteile bieten sowie einen geringeren Bauraum benötigen.

Der Sensor 1 kann erfindungsgemäß für 3-dimensionale Messaufgaben in der Endmontage eingesetzt werden. Er ist auch für in unterschiedlichen Farben lackierte Objekte gut geeignet. Der Sensor 1 kann zusätzlich im Rohbau oder auf Rohblechen eingesetzt werden. Ein weiterer Einsatzbereich sind Roboterführungsaufgaben, wie bspw. Nahtführung oder Nahtverfolgung. Der Sensor kann auch zur Vermessung oder Kontrolle von Profilen bzw. profilierten Oberflächen eingesetzt werden, ebenso wie zur Bestimmung von 3-dimensionalen Profilen applizierter Kleberaupen oder sonstiger In-Line-Inspektionsaufgaben. Dabei kann der Sensor 1 in einem hohen Takt, bspw. alle 1 bis 50 Millisekunden, 3-dimensionale Daten liefern, wobei die LED-Beleuchtungen in entsprechendem Takt geblitzt werden können.

### Bezugszeichenliste:

- 1: Sensor
- 2: Gehäuse
- 2a, b: Gehäuseteile
- 3: Kontrastierungseinheit
- 4: Kamera
- 5: LED-Projektor
- 6: Projektorgehäuse
- 7: Objektiv
- 8: Umlenkspiegel
- 9: Projektionsöffnung
- 10: Objektiv
- 11: Umlenkspiegel
- 12: Kameraöffnung
- 13: Filter
- 14: LED-Flächenbeleuchtung
- 15: Beleuchtungsöffnung
- 16: Anschlussplatte
- 17: Anschluss
- 18: Seitendeckel
- 19: Befestigung
- 20: Kamerahalter
- 21: Projektorhalter
- 22: Basisplatte
- 23: Projektorgehäuse

## Patentansprüche

1. Sensor zur Vermessung der Oberfläche eines Objekts mit einer Kontrastierungseinheit (3) zur Projektion eines Musters auf die Oberfläche des Objekts, einer Kamera (4) zur Aufnahme des auf die Oberfläche des Objekts projizierten Musters sowie mit Umlenkspiegeln (8, 11) In einem Gehäuse (2), wobei die Kontrastierungseinheit (3) einen Projektor (5) aufweist und wobei der Kamera (4) und dem Projektor (5) jeweils Umlenkspiegel (8, 11) zugeordnet sind, welche an den in Längsrichtung des Sensors (1) entgegengesetzten Enden des Gehäuses (2) des Sensors (1) angeordnet sind, **dadurch gekennzeichnet, dass** der Projektor ein LED-Projektor (5) ist und dass die Kamera (4) und der LED-Projektor (5) in Längsanordnung auf einer übereinstimmenden optischen Achse in dem Gehäuse (2) des Sensors (1) angeordnet sind und dass in den Sensor (1) eine Flächenbeleuchtung (14) integriert ist, wobei die Flächenbeleuchtung (14) in Längsrichtung in der Mitte des Gehäuses (2) positioniert ist und der LED-Projektor (5) und die Kamera (4) auf beiden Seiten der Flächenbeleuchtung (14) angeordnet sind.

2. Sensor nach Anspruch 1, **dadurch gekennzeichnet, dass** der LED-Projektor (5) eine Hochleistungs-LED, eine Fresnellinse und eine Maske zur Mustererzeugung aufweist.

3. Sensor nach Anspruch 1 oder 2, **dadurch gekennzeichnet, dass** das Muster mehrere Streifen aufweist und/oder aus einem anderen Flächenmuster besteht.

4. Sensor nach der vorhergehenden Ansprüche, **dadurch gekennzeichnet, dass** das Muster codiert ist.

5. Sensor nach einem der vorhergehenden Ansprüche, **dadurch gekennzeichnet, dass** der LED-Projektor (5) drehbar montiert und ggf. arretierbar ist.

6. Sensor nach einem der vorhergehenden Ansprüche, **dadurch gekennzeichnet,** in die Flächenbeleuchtung eine LED-Flächenbeleuchtung (14) ist.

7. Sensor nach einem der vorhergehenden Ansprüche, **dadurch gekennzeichnet, dass** ein Umlenkspiegel (8, 11) bewegbar angeordnet ist.

8. Sensor nach einem der vorhergehenden Ansprüche, **dadurch gekennzeichnet, dass** die Kamera (4) und/oder der LED-Projektor (5) ein auswechselbares Objektiv (7, 10) und/oder einen Filter (13) aufweisen.

9. Sensor nach einem der vorhergehenden Ansprüche, **dadurch gekennzeichnet, dass** dem LED-Projektor (5) und/oder der Flächenbeleuchtung (14) eine Beleuchtungssteuerung für eine Dauerbeleuchtung und/oder einen Blitzbetrieb zugeordnet ist.

10. Sensor nach einem der vorhergehenden Ansprüche, **dadurch gekennzeichnet, dass** der LED-Projektor (6) und/oder die Flächenbeleuchtung (14) getrennt voneinander schaltbar sind.

11. Sensor nach einem der vorhergehenden Ansprüche, **dadurch gekennzeichnet, dass** der LED-Projektor (5), die Flächenbeleuchtung (14), die Kamera (4) und/oder eine Auswerteinrichtung mit einem Takt von etwa 1 bis 50 ms schaltbar sind.

12. Sensor nach einem der vorhergehenden Ansprüche, **dadurch gekennzeichnet, dass** in den Sensor (1) eine Elektronik mit einem Mikroprozessor zur automatischen Identifikation des Sensors (1) über einen elektronischen Speicher, zur Kommunikation des Sensors (1) mit einer Anschlusseinheit und/oder zur Temperaturkompensation und Kallbrlerdatenverwaltung integriert ist.

13. Sensor nach einem der vorhergehenden Ansprüche, **dadurch gekennzeichnet, dass** dem LED-Projektor (5), der Kamera (4) und der Flächen beleuchtung (14) zugeordnete Austrittsöffnungen (9, 12, 15) auf einer Seite des Gehäuses (2) angeordnet sind.

14. Sensor nach einem der vorhergehenden Ansprüche, **dadurch gekennzeichnet, dass** das Gehäuse (2) des Sensors (1) mehrteilig aufgebaut ist.

15. Sensor nach Anspruch 14, **dadurch gekennzeichnet, dass** das Gehäuse (2) des Sensors (1) aus zwei aneinander festgelegten, L-förmigen Gehäuseteilen (2a, 2b) aufgebaut ist.

16. Sensor nach einem der vorhergehenden Ansprüche, **dadurch gekennzeichnet, dass** die Kontrastlerungseinheit (3) mit dem LED-Projektor (5) und/oder die Kamera (4) ein eigenes Gehäuse (23) aufweisen.

17. Sensor nach einem der Ansprüche 6 bis 15, **dadurch gekennzeichnet, dass** die LED-Flächenbeleuchtung (14) ein eigenes Gehäuse (23) aufweist.

18. Sensor nach einem der vorhergehenden Ansprüche, **dadurch gekennzeichnet, dass** das Gehäuse (2) des Sensors (1) oder Teile davon aus einem glasfaserverstärkten Verbundwerkstoff hergestellt ist.

## Claims

1. A sensor for measuring the surface of an object, having a contrasting unit (3) for projecting a pattern onto the surface of the object, and a camera (4) for recording the pattern projected onto the surface of the object, and having deflection mirrors (8, 11) in a housing (2), said contrasting unit (3) comprising a projector (5) and deflection mirrors (8, 11) which are respectively associated with the camera (4) and the projector (5), said mirrors being arranged on the ends of the housing (2) of the sensor (1), which oppose each other in the longitudinal direction of the sensor (1),
**characterized in that**
the projector is an LED projector (5) and that the camera (4) and the LED projector (5) are arranged longitudinally on a corresponding optical axis in the housing (2) of the sensor (1) and that the sensor (1) has a surface lighting unit (14) integrated therein, wherein the surface lighting unit (14) is positioned in the centre of the housing (2) in the longitudinal direction, and the LED projector (5) and the camera (4) are arranged on either side of the surface lighting unit (14).

2. The sensor according to Claim 1,
**characterized in that**
the LED projector (5) comprises a high-power LED, a Fresnel lens and a mask for generating patterns.

3. The sensor according to Claim 1 or 2,
**characterized in that**
the pattern comprises a plurality of stripes and/or consists of another areal pattern.

4. The sensor according to the preceding claims,
**characterized in that**
the pattern is coded.

5. The sensor according to any one of the preceding claims,
**characterized in that**
the LED projector (5) is mounted in a rotatable manner and, if possible, can be locked.

6. The sensor according to any one of the preceding claims,
**characterized in that**
the surface lighting unit is an LED surface lighting unit (14).

7. The sensor according to any one of the preceding claims,
**characterized in that**
one deflection mirror, (8, 11) is arranged in a moveable manner.

8. The sensor according to any one of the preceding claims,
**characterized in that**
the camera (4) and/or the LED projector (5) comprise an exchangeable lens (7, 10) and/or a filter (13).

9. The sensor according to any one of the preceding claims,
**characterized in that**
a lighting controller for a continuous lighting mode and/or a flashing mode is assigned to the LED projector (5) and/or to the surface lighting unit (14).

10. The sensor according to any one of the preceding claims,
**characterized in that**
the LED projector (5) and/or the surface lighting unit (14) can be switched separately from each other.

11. The sensor according to any one of the preceding claims,
**characterized in that**
the LED projector (5), the surface lighting unit (14), the camera (4) and/or an analysis unit can be switched with a clock period of approximately 1 to 50ms.

12. The sensor according to any one of the preceding claims,
**characterized in that**
a set of electronics is integrated into the sensor (1), which has a microprocessor for the automatic identification of the sensor (1) via an electronic memory, for communication between the sensor (1) and a connection unit and/or for temperature compensation and the management of calibration data.

13. The sensor according to any one of the preceding claims,
**characterized in that**
outlet openings (9, 12, 15) associated with the LED projector (5), the camera (4) and the surface lighting unit (14) are arranged on one side of the housing (2).

14. The sensor according to any one of the preceding claims,
**characterized in that**
the housing (2) of the sensor (1) is constructed from multiple parts.

15. The sensor according to Claim 14,
**characterized in that**
the housing (2) of the sensor (1) is constructed from two L-shaped housing parts which are fixed to each other.

16. The sensor according to any one of the preceding claims,
**characterized in that**
the contrasting unit (3) with the projector (5) and/or the camera (4) have a dedicated housing (23).

17. The sensor according to any one of claims 6 to 15,
**characterized in that**
the LED surface lighting unit (14) has a dedicated housing (23).

18. The sensor according to any one of the preceding claims,
**characterized in that**
the housing (2) of the sensor (1), or parts thereof, is/are produced from a fibreglass-reinforced composite material.

## Revendications

1. Capteur pour mesurer la surface d'un objet avec une unité de contraste (3) pour la projection d'un modèle sur la surface de l'objet, une caméra (4) pour enregistrer le modèle projeté sur la surface de l'objet ainsi que des miroirs de déviation (8, 11) dans un boîtier (2), l'unité de contraste (3) présentant un projecteur (5), et des miroirs de déviation (8, 11) étant respectivement associés à la caméra (4) et au projecteur (5), lesquels miroirs sont disposés aux extrémités du boîtier (2) du capteur (1) qui sont opposées en direction longitudinale du capteur (1), **caractérisé en ce que** le projecteur est un projecteur à diodes électroluminescentes (5) et **en ce que** la caméra (4) et le projecteur à diodes électroluminescentes (5) sont disposés selon un agencement longitudinal sur un axe optique coïncident dans le boîtier (2) du capteur (1) et **en ce qu'**un éclairage de surface (14) est intégré dans le capteur (1), l'éclairage de surface (14) étant positionné en direction longitudinale au milieu du boîtier (2) et le projecteur à diodes électroluminescentes (5) et la caméra (4) étant disposés des deux côtés de l'éclairage de surface (14).

2. Capteur selon la revendication 1, **caractérisé en ce que** le projecteur à diodes électroluminescentes (5) présente une diode électroluminescente de haute puissance, une lentille de Fresnel et un masque pour la génération d'un modèle.

3. Capteur selon les revendications 1 ou 2, **caractérisé en ce que** le modèle présente plusieurs bandes et/ou se compose d'un autre modèle de surface.

4. Capteur selon les revendications précédentes, **caractérisé en ce que** le modèle est codé.

5. Capteur selon l'une des revendications précédentes, **caractérisé en ce que** le projecteur à diodes électroluminescentes (5) est monté de manière rotative et peut être arrêté le cas échéant.

6. Capteur selon l'une des revendications précédentes, **caractérisé en ce que** l'éclairage de surface est un éclairage de surface à diodes électroluminescentes (14).

7. Capteur selon l'une des revendications précédentes, **caractérisé en ce qu'**un miroir de déviation (8, 11) est disposé de manière à pouvoir bouger.

8. Capteur selon l'une des revendications précédentes, **caractérisé en ce que** la caméra (4) et/ou le projecteur à diodes électroluminescentes (5) présentent un objectif (7, 10) échangeable et/ou un filtre (13).

9. Capteur selon l'une des revendications précédentes, **caractérisé en ce que** l'on associe au projecteur à diodes électroluminescentes (5) et/ou à l'éclairage de surface (14) un dispositif de commande d'éclairage pour un éclairage permanent et/ou un fonctionnement en flash.

10. Capteur selon l'une des revendications précédentes, **caractérisé en ce que** le projecteur à diodes électroluminescentes (5) et/ou l'éclairage de surface (14) peuvent être commutés indépendamment l'un de l'autre.

11. Capteur selon l'une des revendications précédentes, **caractérisé en ce que** le projecteur à diodes électroluminescentes (5), l'éclairage de surface (14), la caméra (4) et/ou un dispositif d'analyse peuvent être commutés à une cadence d'environ 1 à 50 ms.

12. Capteur selon l'une des revendications précédentes, **caractérisé en ce que** l'on intègre dans le capteur (1) un système électronique avec un microprocesseur pour l'identification automatique du capteur (1) via une mémoire électronique, pour la communication du capteur (1) avec une unité de connexion et/ou pour la compensation de température et la gestion de données de calibrage.

13. Capteur selon l'une des revendications précédentes, **caractérisé en ce que** des ouvertures de sortie (9, 12, 15) associées au projecteur à diodes électroluminescentes (5), à la caméra (4) et à l'éclairage de surface (14) sont disposées sur un côté du boîtier (2).

14. Capteur selon l'une des revendications précédentes, **caractérisé en ce que** le boîtier (2) du capteur (1) est réalisé en plusieurs pièces.

15. Capteur selon la revendication 14, **caractérisé en ce que** le boîtier (2) du capteur (1) est réalisé grâce à deux éléments de boîtier (2a, 2b) en forme de L fixées l'un à l'autre.

16. Capteur selon l'une des revendications précédentes, **caractérisé en ce que** l'unité de contraste (3) avec le projecteur à diodes électroluminescentes (5) et/ou la caméra (4) présentent un boîtier (23) propre.

17. Capteur selon l'une des revendications 6 à 15, **caractérisé en ce que** l'éclairage de surface à diodes électroluminescentes (14) présente un boîtier (23) propre.

18. Capteur selon l'une des revendications précédentes, **caractérisé en ce que** le boîtier (2) du capteur (1) ou des parties de celui-ci sont fabriqués en un matériau composite renforcé par des fibres.
